(19) Europäisches Patentamt

European Patent Office

Office européen des brevets

(11) **EP 1 672 911 A2**

(12) **EUROPÄISCHE PATENTANMELDUNG**

(43) Veröffentlichungstag:
21.06.2006 Patentblatt 2006/25

(51) Int Cl.:
*H04N 5/21* (2006.01)

(21) Anmeldenummer: 05026653.5

(22) Anmeldetag: 07.12.2005

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **17.12.2004 DE 102004060829**

(71) Anmelder: **Micronas GmbH**
**79108 Freiburg i. Br. (DE)**

(72) Erfinder:
• **Hahn, Marko**
**85579 Neubiberg (DE)**
• **Rieder, Peter, Dr.**
**81737 München (DE)**
• **Scheffler, Günter**
**80939 München (DE)**

(74) Vertreter: **Patentanwälte**
**Westphal, Mussgnug & Partner**
**Mozartstrasse 8**
**80336 München (DE)**

(54) **Verfahren und Vorrichtung zur Reduktion von Rauschen in einem Bildsignal**

(57)    Die Erfindung betrifft ein Verfahren und eine Vorrichtung zur Reduktion von Rauschen in einem Bildsignal (S(z)), das eine Bildfolge mit aufeinanderfolgenden Bildern repräsentiert, wobei jedes Bild wenigstens einen Bildabschnitt (P(k)) aufweist. Dabei ist vorgesehen, zu dem Bildabschnitt einen ersten gefilterten Zwischenbildabschnittes (P1(k)) durch Anwenden eines zeitlichen Rauschreduktionsverfahrens und einen zweiten gefilterten Zwischenbildabschnitt (P2(k)) durch Anwenden eines örtlichen Rauschreduktionsverfahrens zu erzeugen und die Zwischenbildabschnitte (P1(k)), P2(k)) unter Berücksichtigung wenigstens eines Gewichtungsfaktors (G) zu mischen, um einen gefilterten Bildabschnitt (P3(k)) zu erzeugen. Der Gewichtungsfaktor wird dabei abhängig von wenigstens einem Bewegungsindikator (D1(k), D2(k), Min(k)) erzeugt, der ein Maß für das Vorhandensein bewegter Objekte in dem wenigstens einen Bildabschnitt darstellt.

FIG 1

**Beschreibung**

Verfahren und Vorrichtung zur Reduktion von Rauschen in einem Bildsignal

Die vorliegende Erfindung betrifft ein Verfahren zur Reduktion von Rauschen in einem Bildsignal, das eine Folge von Bildern repräsentiert.

Grundsätzlich sind zwei unterschiedliche Arten einer Rauschreduktion in Bildsignalen bekannt: eine örtliche Rauschreduktion und eine zeitliche Rauschreduktion.

Bei der örtlichen Rauschreduktion erfolgt eine Filterung des Bildsignals dahingehend, dass zur Reduktion von Rauschen in einem Bild nur Bildinformationswerte von solchen Bildpunkten berücksichtigt werden die innerhalb des Bildes liegen. Man macht sich hierbei zu Nutze, dass die Bildinformationswerte von in einem Bild benachbarten Bildpunkten häufig miteinander korreliert sind, wobei diese Korrelation zur Rauschunterdrückung genutzt werden kann. Verfahren zur örtlichen Rauschreduktion sind beispielsweise in Schröder, H.; Blume, H.: "Mehrdimensionale Signalverarbeitung", Band 1, Teubner Verlag, 1998, ISBN 3-519-06196-1, Seiten 451-471 oder Schröder, H. ; Blume, H.: "Mehrdimensionale Signalverarbeitung", Band 2, Teubner Verlag, 2000, ISBN 3-519-06197-X, Seiten 375-384 beschrieben.

Bei der zeitlichen Rauschreduktion werden zur Reduktion des Rauschens in einem Bild die Bildinformationen wenigstens eines weiteren Bildes berücksichtigt, das dem einen Bild in der Bildfolge vorhergeht oder nachfolgt. Verfahren zur zeitlichen Rauschreduktion sind beispielsweise in Schröder, H; Blume, H, a.a.O., Seiten 384-397 beschrieben.

Zeitliche Rauschreduktionsverfahren beruhen grundsätzlich darauf, dass der Bildinhalt eines bereits gefilterten Bildes mit dem Bildinhalt eines noch zu filternden, in der Bildfolge dem gefilterten Bild nachfolgenden oder vorausgehenden Bildes verglichen wird. Die zeitliche Rauschreduktion funktioniert dabei besonders gut, wenn der Inhalt der verglichenen Bilder gleich ist, wenn die Bildfolge also insbesondere keine sich bewegenden Objekte darstellt, die zu einer Änderung des Bildinhaltes führen.

Eine verbesserte zeitliche Filterung kann mit bewegungsadaptiven zeitlich rekursiven Filtern erreicht werden. Zur Detektion von sich bewegenden Objekten bzw. sich bewegenden Bildanteilen in einer Bildfolge verfügen bewegungsadaptive zeitlich rekursive Filter zur Rauschreduktion über einen Bewegungsdetektor, der ein Ausgangssignal bereitstellt, das ein Maß für die detektierte Bewegung darstellt. Durch dieses Ausgangssignal wird ein Mischfaktor für eine Mischung des aktuellen Bildes bzw. Bildsignals mit einem vorherigen zurückgekoppelten Bild bzw. Bildsignal gesteuert. Wird Bewegung erkannt, so enthält das durch Mischen erhaltene Bild einen größeren Anteil des aktuellen Bildes. Wird wenig Bewegung erkannt, so enthält das durch Mischen erhaltene Bild einen entsprechend größeren Anteil des zurückgekoppelten bzw. früheren. Bildes. Das Mischergebnis wird dann zur späteren oben beschriebenen Rückkopplung in einer Bildverzögerungseinrichtung gespeichert. Nachteilig ist bei diesem Verfahren, dass der Bewegungsdetektor nicht zwischen Bilddifferenzen unterscheiden kann, die aus einer Bewegung resultieren und solchen, die aus einem im Bild vorhandenen Rauschen resultieren.

Ein bewegungskompensiertes zeitliches Rauschreduktionsverfahren ist beispielsweise in der DE 196 36 952 A1 beschrieben.

Nachteilig an bewegungskompensierten zeitlichen Rauschreduktionsverfahren ist, dass vor der eigentlichen Rauschreduktion eine mitunter aufwändige Bewegungsschätzung durchgeführt werden muss. Eine nicht-bewegungskompensierte zeitliche Rauschreduktion für die Filterung einer Bildfolge mit bewegten Inhalten liefert hingegen häufig keine befriedigenden Reduktionsergebnisse.

Ein örtliches Rauschreduktionsverfahren liefert insbesondere bei Bildfolgen mit bewegtem Inhalt bessere Reduktionsergebnisse als ein nicht-bewegungskompensiertes zeitliches Rauschreduktionsverfahren. Der Nachteil eines örtlichen Rauschreduktionsverfahrens besteht allerdings darin, dass feine Bildstrukturen, insbesondere sogenannte Texturen, als Rauschen ausgefiltert werden, obwohl sie Nutzinhalt darstellen. Solche feinen Strukturen bleiben bei zeitlichen Reduktionsverfahren besser erhalten.

Ziel der vorliegenden Erfindung ist es, ein Verfahren zur Reduktion von Rauschen in einem Bildsignal, das eine Bildfolge repräsentiert, zur Verfügung zu stellen, das mit geringem Aufwand realisierbar ist und das sowohl bei Bildfolgen mit bewegtem Inhalt als auch bei Bildfolgen mit unbewegtem Inhalt eine gute Rauschunterdrückung gewährleistet. Ziel der Erfindung ist es außerdem, eine Vorrichtung zur Durchführung eines solchen Verfahrens zur Verfügung zu stellen.

Dieses Ziel wird durch ein Verfahren mit den Merkmalen des Anspruchs 1 und durch eine Vorrichtung mit den Merkmalen des Anspruchs 19 erreicht. Vorteilhafte Ausgestaltungen der Erfindung sind Gegenstand der Unteransprüche.

Bei dem erfindungsgemäßen Verfahren zur Reduktion von Rauschen in einem Bildsignal, das eine Bildfolge mit aufeinanderfolgenden Bildern repräsentiert, von denen jedes wenigstens einen Bildabschnitt aufweist, ist vorgesehen, für jeden Bildabschnitt der Bildfolge einen gefilterten Bildabschnitt durch folgende Verfahrensschritte zu erzeugen:

-   Bereitstellen eines ersten gefilterten Zwischenbildabschnittes durch Anwenden eines zeitlichen Rauschreduktionsverfahrens auf den Bildabschnitt,

- Bereitstellen eines zweiten gefilterten Zwischenbildabschnittes durch Anwenden eines örtlichen Rauschreduktionsverfahrens auf den Bildabschnitt,

- Mischen der ersten und zweiten Zwischenbildabschnitte unter Berücksichtigung eines Gewichtungsfaktors, um den gefilterten Bildabschnitt zu erzeugen,

- Ermitteln eines Bewegungsindikators anhand von Bildabschnitten der Bildfolge und/oder anhand von gefilterten Bildabschnitten der Bildfolge, der ein Maß für das Vorhandensein bewegter Objekte in dem wenigstens einen Bildabschnitt darstellt, und Erzeugen des Gewichtungsfaktors abhängig von dem Bewegungsindikator.

Das erfindungsgemäße Verfahren stellt ein adaptives Rauschreduktionsverfahren dar, das eine örtliche und zeitliche Filterung des Bildsignals umfasst. Der Einfluss der örtlichen und zeitlichen Filterung auf das Ergebnis, d.h. auf den gefilterten Bildabschnitt bzw. das gefilterte Signal, wird dabei abhängig von in der Bildfolge ermittelten Bewegungsanteilen angepasst. Hierzu wird parallel ein zeitliches und ein örtliches Rauschreduktionsverfahren auf die zu filternde Bildfolge angewendet, wobei eine Mischung der hieraus resultierenden gefilterten Zwischenbildfolgen abhängig vom Vorhandensein sich bewegender Objekte in der Bildfolge durchgeführt wird.

Die Bewegungsdetektion kann dabei mittels eines einfachen Algorithmus erfolgen, der beispielsweise Abweichungen zwischen entsprechenden Bildabschnitten aufeinanderfolgender Bilder der zu filternden Bildfolge oder Abweichungen zwischen einem noch zu filternden Bildabschnitt und einem verzögerten bzw. früheren, bereits gefilterten Bildabschnitt ermittelt. Diese Abweichungen sind bekanntlich um so größer, je mehr Bewegungsanteile die durch die Bildfolge dargestellten Bilder enthalten. Je größer der ermittelte Bewegungsanteil dabei ist, um so stärker wird der örtlich gefilterte zweite Zwischenbildabschnitt bei der Mischung der ersten und zweiten Zwischenbildabschnitte gewichtet, wodurch die örtliche Filterung insgesamt überwiegt. Sind keine oder geringe Bewegungsanteile in der Bildfolge vorhanden, wird hingegen der räumlich gefilterte erste Zwischenbildabschnitt stärker gewichtet, wodurch die zeitliche Filterung insgesamt überwiegt. Im Extremfall wird einer der Zwischenbildabschnitte mit Null gewichtet, wodurch der gefilterte Bildabschnitte dann entweder ein nur örtlich gefilterter oder ein nur zeitlich gefilterter Bildabschnitt ist.

Unter "Bildabschnitt" ist im Zusammenhang mit der Erfindung ein Abschnitt eines Bildes zu verstehen, der wenigstens einen Bildpunkt umfasst. Der Bildabschnitt kann dabei mehrere benachbarte Bildpunkte eines Bildes, beispielsweise eine Zeile des Bildes, mehrere benachbarte Zeilen des Bildes oder mehrere benachbarte Zeilenabschnitte eines Bildes umfassen. Der Bildabschnitt kann aber auch so gewählt sein, dass er das gesamte Bild umfasst. Die Unterteilung des Bildes in mehrere Bildabschnitte, die im Extremfall nur einen Bildpunkt umfassen, und die separate Filterung der einzelnen Bildabschnitte bietet den Vorteil, dass einzelne Bildabschnitte eines Bildes abhängig von der für den jeweiligen Bildabschnitt ermittelten Bewegung unterschiedlich gefiltert werden können, was zu einem verbesserten Filterergebnis für das Gesamtbild führt. Unter "korrespondierenden Bildabschnitten" oder "zugehörigen Bildabschnitten" sind im Zusammenhang mit der vorliegenden Erfindung solche Bildabschnitte in verschiedenen Bildern oder Zwischenbildern zu verstehen, die sich in ihrer Position bezogen auf das jeweilige Bild und in ihren Abmessungen entsprechen.

Die erfindungsgemäße Vorrichtung zur Reduktion von Rauschen in einem Bildsignal, das eine Bildfolge mit aufeinanderfolgenden Bildern repräsentiert, von denen jedes wenigstens einen Bildabschnitt aufweist, umfasst folgende Merkmale:

- ein erstes Rauschreduktionsfilter, dem das Bildsignal zugeführt ist und das dazu ausgebildet ist, für jeden Bildabschnitt eines Bildes der Bildfolge einen zeitlich gefilterten ersten Zwischenbildabschnitt zu erzeugen,

- ein zweites Rauschreduktionsfilter, dem das Bildsignal zugeführt ist und das dazu ausgebildet ist, für jeden Bildabschnitt eines Bildes der Bildfolge einen örtlich gefilterten zweiten Zwischenbildabschnitt zu erzeugen,

- eine Mischanordnung, der der erste und zweite Zwischenbildabschnitt zugeführt sind und die einen gefilterten Bildabschnitt aus dem ersten und zweiten Zwischenbildabschnitt durch Mischen nach Maßgabe eines Gewichtungsfaktors erzeugt,

- eine Bewegungsdetektoreinheit, der einen Bewegungsindikator anhand des Inhalts von Bildabschnitten der Bildfolge und/oder anhand des Inhalts von gefilterten Bildabschnitten der Bildfolge erzeugt, der ein Maß für das Vorhandensein bewegter Objekte in der Bildfolge darstellt,

- eine Gewichtungsfaktorerzeugungsschaltung, die den Gewichtungsfaktor abhängig von dem Bewegungsindikator erzeugt.

Die vorliegende Erfindung wird nachfolgend anhand von Figuren näher erläutert.

Figur 1     zeigt ein erstes Ausführungsbeispiel einer erfindungsgemäßen Vorrichtung zur Rauschreduktion.

Figur 2     zeigt schematisch einen zu filternden Bildabschnitt eines Bildes einer Bildfolge.

Figur 3     zeigt ein Ausführungsbeispiel für ein in der erfindungsgemäßen Vorrichtung verwendetes nicht adaptives zeitliches rekursives Rauschreduktionsfilter.

Figur 4     zeigt ein Ausführungsbeispiel für ein in der erfindungsgemäßen Vorrichtung verwendetes bewegungsadaptives zeitliches rekursives Rauschreduktionsfilter (Figur 4a) sowie eine in dem Filter in einer Zuordnungseinheit verwendete Kennlinie (Figur 4b).

Figur 5     zeigt ein Ausführungsbeispiel für ein in der erfindungsgemäßen Vorrichtung verwendetes räumliches Rauschreduktionsfilter (Figur 5a) und Beispiele für verschiedene in einer Coring-Einheit des Filters anwendbare Coring-Kennlinien (Figur 5b).

Figur 6     veranschaulicht die Kennlinie einer in der erfindungsgemäßen Vorrichtung verwendeten Gewichtungssignalerzeugungseinheit.

In den Figuren bezeichnen, sofern nicht anders angegeben, gleiche Bezugszeichen gleiche Komponenten und Signale mit gleicher Bedeutung.

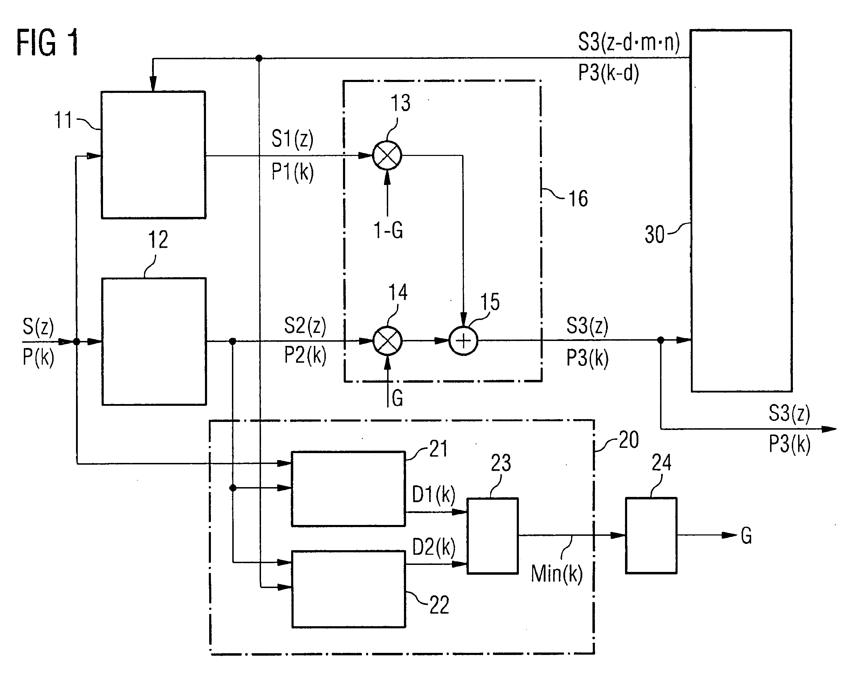

Figur 1 zeigt eine erfindungsgemäße Vorrichtung zur Rauschreduktion, deren Aufgabe es ist, Rauschen in einem Bildsignal S(z), das eine Folge mit Bildabschnitten von aufeinanderfolgenden Bildern repräsentiert, zu reduzieren.

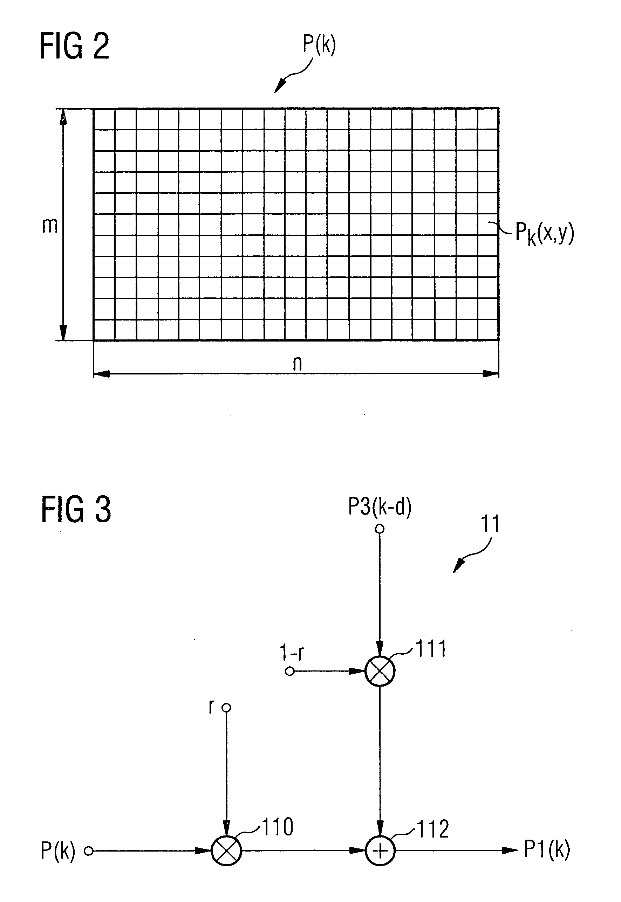

Bezugnehmend auf Figur 2 umfasst jeder dieser Bildabschnitte eine Bildpunktmatrix mit m·n Bildpunkten, wobei jedem dieser Bildpunkte $P_k(x,y)$ wenigstens ein Bildinformationswert, beispielsweise ein Helligkeitswert (Luminanzwert) oder ein Farbinformationswert (Chrominanzwert) zugeordnet ist. Das Bildsignal S(z) enthält die Bildinformationswerte der einzelnen Bildabschnitte der aufeinanderfolgenden Bilder P(k) der Bildfolge beispielsweise als serielle Folge von Bildinformationswerten, wobei zur Übertragung eines Bildabschnittes P(k) m·n Bildinformationswerte erforderlich sind.

Die durch die dargestellte Vorrichtung verarbeiteten Bildabschnitte können beliebig gewählt werden. Die umfassen in einem ersten Extremfall nur einen einzigen Bildpunkt und in einem zweiten Extremfall alle Bildpunkte eines Bildes, können jedoch so gewählt werden, dass sie innerhalb dieser Extreme beliebig viele zusammenhängende Bildpunkte eines Bildes umfassen.

Die Vorrichtung gemäß Figur 1 ist dazu ausgebildet, zu jedem Bildabschnitt P(k) eines Bildes der eingehenden Bildfolge einen korrespondierenden rauschreduzierten gefilterten Bildabschnitt P3(k), bzw. zu dem Bildsignal S(z) ein rauschreduziertes gefiltertes Bildsignal S3(z) zu erzeugen. Dieses rauschreduzierte Signal S3(z) kann beispielsweise einer Anzeigevorrichtung (nicht dargestellt) zur Darstellung der in der Bildfolge enthaltenen, jeweils wenigstens einen Bildabschnitt aufweisenden Bilder oder einer Speichereinrichtung 30 zur Speicherung des rauschreduzierten Bildsignals zugeführt werden.

Die erfindungsgemäße Vorrichtung weist ein erstes Rauschreduktionsfilter 11 auf, dem das zu filternde Bildsignal S(z) zugeführt ist und das ein erstes gefiltertes Zwischensignal S1(z) erzeugt. Dieses erste Rauschreduktionsfilter 11 führt ein zeitliches Rauschreduktionsverfahren durch und wird nachfolgend als "zeitliches Rauschreduktionsfilter" bezeichnet, das erste Zwischensignals S1(z) wird nachfolgend auch als "zeitlich gefiltertes Zwischensignal" bezeichnet.

Zeitliche Rauschreduktionsfilter, die in der Bildverarbeitung eingesetzt werden, berücksichtigen in hinlänglich bekannter Weise neben dem zu filternden Bild weitere noch ungefilterte Bilder der Bildfolge oder bereits gefilterte Bilder der Bildfolge. In dem dargestellten Beispiel ist dem zeitlichen Rauschreduktionsfilter 11 neben dem zu filternden Bildabschnitt P(k) ein verzögerter, das heißt bereits früher erzeugter, gefilterter Bildabschnitt P3(k-d) zugeführt. Dieser verzögerte, gefilterte Bildabschnitt P3(k-d) wird durch einen Bildspeicher 30 zur Verfügung gestellt, dem die Folge der gefilterten Bildabschnitte bzw. Bilder zur Zwischenspeicherung zugeführt ist. Die gewünschte Verzögerung d zwischen dem zu filternden Bildabschnitt P(k) und dem für die zeitliche Filterung berücksichtigten bereits gefilterten Bildabschnitt P3(k-d) bestimmt die Kapazität des Zwischenbildspeichers 30. Diese Kapazität muss so bemessen sein, dass die Bildabschnitte von d gefilterten Bildern zwischengespeichert werden. Für d=1, wenn für die zeitliche Filterung in dem Filter 11 neben dem zu filternden Bildabschnitt P(k) der korrespondierende Bildabschnitt P3(k-1) eines unmittelbar zuvor erzeugten gefilterte Bildes verwendet wird, ist die Kapazität des Bildspeichers 30 so zu bemessen, dass nur die Bildabschnitte eines gefilterten Bildes zwischengespeichert werden können.

Zur Durchführung einer zeitlichen Rauschreduktion können in bekannter Weise sowohl nicht rekursive Filter, sogenannte FIR-Filter (FIR - finite impulse response), als auch rekursive Filter, sogenannte IIR-Filter (IIR - infinite impulse response) verwendet werden. Dabei sind rekursive Filter im Vergleich zu nicht rekursiven Filtern üblicherweise mit geringerem Aufwand zu realisieren.

Figur 3 zeigt ein Realisierungsbeispiel für ein rekursives zeitliches Rauschreduktionsfilter 11, das als IIR-Filter realisiert ist. Dieses Filter 11 gewichtet den zu filternden Bildabschnitt P(k) mittels einer ersten Gewichtungseinheit 110 mit einem ersten Gewichtungsfaktor sowie einen gefilterten, verzögerten Bildabschnitt P3(k-d) mittels einer zweiten Gewichtungseinheit mit einem zweiten Gewichtungsfaktor. Die an Ausgängen der Gewichtungseinheiten 110, 111 zur Verfügung stehenden gewichteten Bildabschnitte werden mittels eines Addierers 112 addiert, um den zeitlich gefilterten Zwischenbildabschnitt P1(k) zu erzeugen. Die Summe der beiden Gewichtungsfaktoren ergibt dabei Eins, wobei in dem Beispiel der zweite Gewichtungsfaktor 1-r und der erste Gewichtungsfaktor r beträgt.

Der zweite Gewichtungsfaktor 1-r, der nachfolgend auch als Rückkoppelfaktor bezeichnet wird, beschreibt, in welchem Maß der ungefilterte Bildabschnitt P(k) mit dem rückgekoppelten bereits gefilterten Bildabschnitt P3(k-d) gemischt wird, wobei in dem Beispiel der Anteil des ungefilterten Bildabschnittes an dem gemischten Bildabschnitt P1(k) um so größer ist, je größer dieser Rückkopplungsfaktor ist. Die Wahl eines festen, jeweils vom Inhalt des ungefilterten Eingangsbildabschnittes und des gefilterten rückgekoppelten Bildabschnittes P3(k-d) unabhängigen Rückkoppelfaktors macht das System unempfindlich für Bewegung.

Der Rückkoppelfaktor kann prinzipiell zwischen 0 und 1 gewählt werden, wobei in den beiden Grenzfällen am Ergebnis der Mischung nur eines der beiden Eingangssignale ausschließlich beteiligt ist. Sollte einer dieser beiden Grenzfälle als Anwendungsfall gewünscht sein, so kann anstatt des zeitlichen Rauschreduktionsfilters entsprechend das gewünschte der beiden Eingangssignale ohne Berücksichtigung des entsprechend anderen Eingangssignals zum Ausgang durchgeführt werden.

Kleine, durch Rauschen hervorgerufene Bilddifferenzen werden durch die beschriebene Mischung bei Verwendung des Filters nach Figur 3 reduziert. Allerdings werden bei fest vorgegebenen Gewichtungsfaktoren auch größere Differenzen bei bewegtem Bildinhalt statisch gemischt, was sich durch ein sogenanntes "Nachziehen bewegter Objekte" im Bild negativ bemerkbar macht. Vorteilhafterweise wird als zeitliches Rauschreduktionsfilter daher eine bewegungsadaptives Filter eingesetzt.

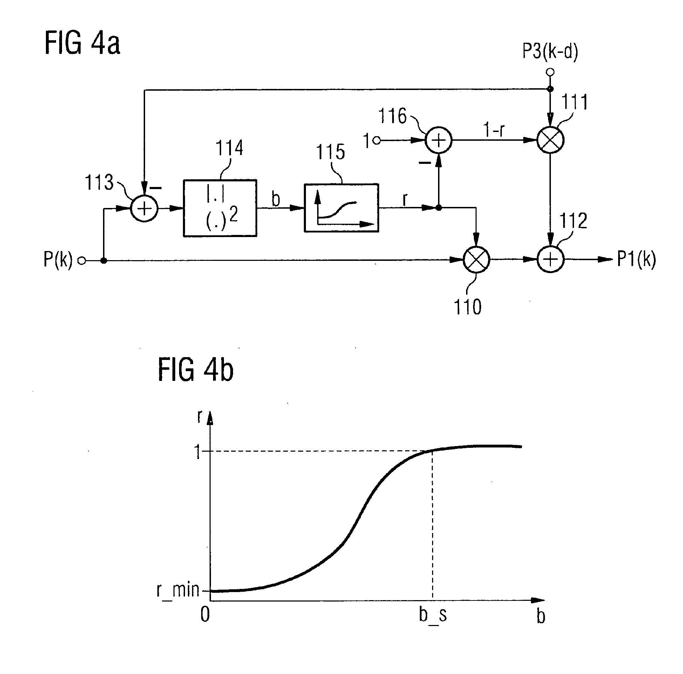

Figur 4a zeigt ein Realisierungsbeispiel für ein solches bewegungsadaptives rekursives zeitliches Rauschreduktionsfilter 11, das als IIR-Filter realisiert ist. Die prinzipielle Funktionsweise dieses Filters entspricht der Funktionsweise des anhand von Figur 3 erläuterten Filters. Zusätzlich zu den Gewichtungseinheiten 110, 111 und dem Addierer weist das Filter gemäß Figur 4a Mittel zur adaptiven Erzeugung des ersten Gewichtungsfaktors r und damit auch des Rückkoppelfaktors 1-r auf. Die Erzeugung des Rückkoppelfaktors 1-r erfolgt dabei angepasst an die Inhalte des ungefilterten Eingangsbildabschnitts P(k) und des gefilterten rückgekoppelten Bildabschnitts.

Die Mittel zur Erzeugung des Rückkoppelfaktors umfassen einen Subtrahierer 113, der den gefiltert Bildabschnitt P3(k-d) von dem gefilterten Bildabschnitt subtrahiert, um einen Differenz-Bildabschnitt zu erzeugen, und eine Einheit 114 zur Bildung des Betrages oder des Quadrates des Differenzbildabschnittes. Es sei darauf hingewiesen, dass unter "Differenz-Bildabschnitt" eine Folge von Bildpunktdifferenzen zu verstehen ist, die durch bildpunktweise Subtraktion des gefilterten Bildabschnittes P3(k-d) von dem ungefilterten Bildabschnitt (P(k)) erhalten werden. Sofern die Bildabschnitte nur jeweils einen Bildpunkt umfassen, umfasst diese Folge der Bildpunktdifferenzen nur einen Wert.

Die Einheit 114 liefert zu jedem Differenz-Bildabschnitt einen Differenzwert b, der der Summe der Beträge oder der Quadrate der einzelnen Bildpunktdifferenzen entspricht, und der ein Maß für die Abweichung des ungefilterten Bildabschnittes P(k) von dem gefilterten Bildabschnitt P3(k-d) darstellt. Dieser Differenzwert b ist einer Zuordnungseinheit 115 zugeführt, die unter Verwendung einer abgespeicherten Kennlinie zu dem Differenzwert b den ersten Gewichtungsfaktor r ermittelt. Ein weiterer Subtrahierer 116, dessen einem Eingang der konstante Wert 1 und dessen anderem Eingang der erste Gewichtungsfaktor zugeführt ist, erzeugt den Rückkoppelfaktor 1-r.

Die Kennlinie der Zuordnungseinheit ist so gewählt, dass bei kleinen Differenzwerten b der erste Gewichtungsfaktor r so gewählt wird, dass der bereits gefilterte und rückgekoppelte Bildabschnitt P3(k-d) bevorzugt wird, und dass bei großen Bilddifferenzen eher der ungefilterte Eingangsbildabschnitt P(k) bevorzugt wird. Für das Beispiel gemäß Figur 4a, bedeutet das, dass der erste Gewichtungsfaktor r mit zunehmendem Differenzwert b, das heißt mit zunehmender Abweichung der beiden Bildabschnitte P(k), P3(k-d) zunimmt.

Ein Beispiel für eine solche Kennlinie ist in Figur 4b dargestellt, wobei der Gewichtungsfaktor r über dem Differenzwert b aufgetragen ist. Die dargestellte Kennlinie basiert auf der Ermittlung des Differenzwertes b durch Betragsbildung. Die Kennlinie ist nicht linear und ordnet einem Differenzwert b=0 einen Minimalwert r_min für den ersten Gewichtungsfaktor r zu. Dieser Minimalwert ist vorzugsweise größer als Null. Für Differenzwerte b oberhalb eines Schwellenwertes b_s nimmt der Gewichtungsfaktor r den Wert Eins an. Die Steigung der Kennlinie ist ausgehend von dem Differenzwert b=0 zunächst gering, nimmt dann zu und nimmt vor Erreichen des Schwellenwertes b_s wieder ab.

Durch diese Ausgestaltung der an sich frei wählbaren Kennlinie wird erreicht, dass der bereits gefilterte rückgekoppelte Bildabschnitt bei kleinen Bilddifferenzen bei der Mischung der beiden Bildabschnitte P(k), P3(k-d) stärker gewichtet wird als bei größeren und großen Bilddifferenzen. Bei solchen großen Bilddifferenzen wird eher das Vorhandensein von Bewegung angenommen, so dass hier zur Vermeidung des bereits beschriebenen Nachziehens eher der ungefilterte Eingangsbildabschnitt P(k) stärker zu gewichten ist.

Die Gestaltung der Kennlinie insbesondere die Positionierung des Überganges also des Bereiches mit dem größten Anstieg innerhalb der Kennlinie ist Gegenstand von in der Literatur beschriebenen Optimierungen. Einfluss nimmt hier auch ein mit nicht näher beschriebenen technischen Hilfsmitteln gewonnenes oder angenommenes Maß für das im Signal enthaltene oder erwartete Rauschen.

Bezugnehmend auf Figur 1 umfasst die erfindungsgemäße Rauschreduktionsvorrichtung ein zweites Filter 12, dem das Bildsignal S(z) zugeführt ist und das zu jedem Bildabschnitt P(k) eines Bilds der Bildfolge einen zweiten gefilterten Zwischenbildabschnitt P2(k) bzw. zu dem Bildsignal ein zweites gefiltertes Zwischensignal S2(z) erzeugt. Das zweite Rauschreduktionsfilter 12 führt ein örtliches Rauschreduktionsverfahren durch und wird deshalb nachfolgend als "örtliches Rauschreduktionsfilter" bezeichnet, das zweite gefilterte Zwischensignal S2(z) wird nachfolgend auch als "örtlich gefiltertes Zwischensignal" bezeichnet.

Verfahren zur örtlichen Rauschreduktion, also Verfahren zur Rauschreduktion, bei denen jeweils nur der Inhalt des zu filternden Bildes P(k) berücksichtigt wird, sind hinlänglich bekannt. Implementierungsbeispiele für solche örtlichen Rauschreduktionsverfahren sind beispielsweise in Schröder, H.; Blume, H.: "Mehrdimensionale Signalverarbeitung", Band 1, Teubner Verlag, 1998, ISBN 3-519-06196-1, Seiten 451-471 oder in Schröder, H.; Blume, H.: "Mehrdimensionale Signalverarbeitung", Band 2, Teubner Verlag, 2000, ISBN 3-519-06197-X, Seiten 375-384 beschrieben.

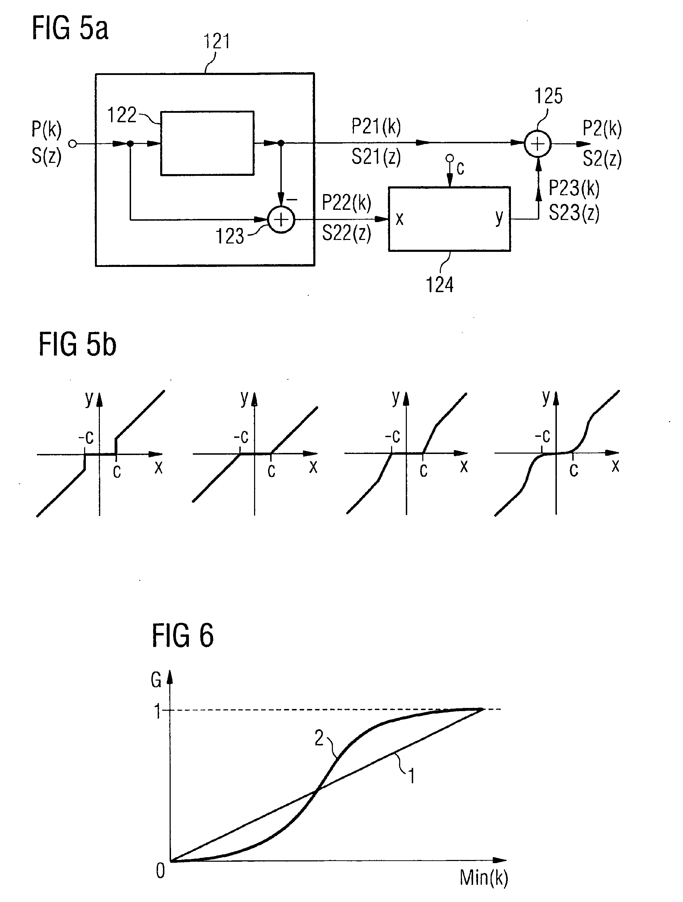

Figur 5a zeigt ein Realisierungsbeispiel für ein räumliches Rauschreduktionsfilter. Die Schaltung besteht aus einer Einrichtung 121 zur Aufspaltung des Eingangssignals P(k) bzw. S(z) in ein Durchlassbandsignal P21(k)/S21(z) und ein Sperrbandsignal P22(k)/S22(z). Dieser Aufspaltung des Eingangssignals P(k)/S(z) in mindestens zwei Bänder liegt die Annahme zu Grunde, dass sich die später zu unterdrückenden Störungen eher in einem dieser beiden Bänder, dem Sperrband, konzentrieren.

Die Einrichtung 121 zur Aufspaltung des Eingangssignals weist ein Filter 122 auf, das als eindimensionales Filter oder als zweidimensionales Filter realisiert ist, wobei hier in horizontaler und/oder vertikaler bzw. in jeder beliebigen diagonalen Richtung im Bild gefiltert werden kann.

Das Filter 122 zur Aufteilung des Signals in ein Durchlass- und ein Sperrbandsignal kann beispielhaft ein lineares zeitinvariantes Filter sein, das auf das Frequenzspektrum des Eingangssignals P(k)/S(z) abgestimmt ist.

Ebenso ist es möglich, andere Parameter zur Bandaufspaltung auszunutzen. So könnten zur Bandaufspaltung beispielsweise statistische Rangordnungsfilter (Medianfilter) oder Kantenadaptive Filter verwendet werden.

In dem Beispiel sind Durchlass- und Sperrbandsignal P21 (k) /S21 (z) bzw. P22 (k) /S22 (z) zueinander komplementär, wobei das Sperrbandsignal P22(k)/S22(z) durch Subtraktion des Durchlassbandsignals P21(k)/S21(z) von dem Eingangssignal P(k)/S(z) mittels eines Subtrahierers 123 gewonnen wird. Aus der Addition von Durchlass- und Sperrbandsignal lässt sich somit das Eingangssignal der Einrichtung 121 zur Bandaufspaltung wieder rekonstruieren.

Das Filter 121 ist beispielsweise ein Tiefpassfilter oder ein Bandpassfilter.

In nicht dargestellter Weise besteht auch die Möglichkeit, das Sperrbandsignal durch ein Sperrbandfilter zu erzeugen und das Durchlassbandsignal P21(k)/S21(z) durch Subtraktion des Sperrbandsignals P22(k)/S22(z) von dem Eingangssignal P(k)/S(z) zu erzeugen.

Im allgemeinsten Fall werden mindestens zwei von einander unterschiedliche Signale, mindestens ein Durchlassbandsignal und ein Sperrbandsignal durch Nutzung mindestens eines Durchlassfilters und eines Sperrfilters erzeugt. Wenn dies gewünscht, lässt sich bei entsprechender Gestaltung der Filter aus der Summe aus Sperrband- und Durchlassbandsignalen das Eingangssignal der Einrichtung zur Bandaufspaltung rekonstruieren.

In dem Beispiel erfüllt das Sperrbandsignal die Eigenschaft der Gleichanteilsfreiheit. Eine nachgeschaltete Coring-Einrichtung 124 erlaubt es, durch geeignete Gestaltung der Coring-Kennlinie kleine Signalamplituden, die als Rauschen angenommen werden, zu unterdrücken. Bei der anschließenden Addition von Durchlassbandsignal P21(k) /S21(z) und Ausgangssignal der Coring-Einrichtung 124 mittels eines Addierers 125 wird das ursprüngliche Eingangssignal vermindert um die in der Coring-Einrichtung 124 unterdrückten Rauschsignalanteile rekonstruiert. Dieses rekonstruierte Signal P2(k)/S2(z) bildet das am Ausgang des Filters zur Verfügung stehende zweite Zwischensignal.

Beispiele für die in der Coring-Einheit implementierten Coring-Kennlinien sind in Figur 5b dargestellt. Der Coring-Paremeter c bestimmt dabei, für welche Eingangswerte x (entspricht dem Signal S22(z) in Figur 5a das Ausgangssignal y (entspricht dem Signal S23(z) in Figur 5a) zu Null gesetzt wird.

Bezug nehmend auf Figur 1 sind das gefilterte erste Zwischensignal S1(z) und das gefilterte zweite Zwischensignal S2(z) einer Mischeinrichtung 16 zugeführt, die die gefilterten Zwischensignale S1(z), S2(z) bzw. die gefilterten Zwischenbildabschnitte P1(k), P2(k) nach Maßgabe eines Gewichtungsfaktors G mischt, um das gefilterte Bildsignal S3(z) bzw. den gefilterten Bildabschnitt P3(k) bereitzustellen.

Diese Mischeinrichtung 16 umfasst in dem Ausführungsbeispiel eine erste Gewichtungseinheit 13 zur Gewichtung des ersten Zwischensignals S1(z) und eine zweite Gewichtungseinheit 14 zur Gewichtung des zweiten Zwischensignals S2(z) sowie einen den Gewichtungseinheiten 13, 14 nachgeschalteten Addierer 15, an dessen Ausgang das gefilterte Bildsignal S3(z) zur Verfügung steht. Für den Wert des Gewichtungsfaktors G, dessen Erzeugung noch erläutert werden wird, gilt $0 \leq G \leq 1$. Für das gefilterte Bildsignal S3(z) gilt:

$$S3(z) = (1 - G) \cdot S1(z) + G \cdot S2(z) \qquad (1).$$

Bei der erfindungsgemäßen Vorrichtung ist die Filtercharakteristik durch den Gewichtungsfaktor G einstellbar, wobei das zeitlich gefilterte Zwischensignal S1(z) bei der Erzeugung des gefilterten Bildsignals S3(z) umso stärker gewichtet wird, je kleiner dieser Gewichtungsfaktor G ist. Die Filtercharakteristik lässt sich durch den Gewichtungsfaktor G von einer ausschließlich zeitlichen Filterung bei einem Gewichtungsfaktor G = 0 adaptiv bis hin zu einer ausschließlich örtlichen Filterung bei einem Gewichtungsfaktor G = 1 variieren.

Für die Erzeugung des Gewichtungsfaktors G umfasst die Vorrichtung eine Bewegungsdetektoreinheit 20, dessen Aufgabe es ist, Bewegungsanteile in korrespondierenden Bildabschnitten aufeinanderfolgender Bilder der zu filternden Bildfolge P(k) zu ermitteln und einen Bewegungsindikatorwert Min(k) zu erzeugen, der ein Maß für detektierte Bewegungsanteile in dem jeweiligen Bildabschnitt darstellt. Dieser Bewegungsindikatorwert Min(k) ist einem Gewichtungsfaktorerzeugungseinheit 24 zugeführt, die den Gewichtungsfaktor G abhängig von dem Bewegungsindikatorwert Min(k) erzeugt. Allgemein sind die Bewegungsdetektoreinheit 20 und die Gewichtungsfaktorerzeugungseinheit 24 so aufeinander abgestimmt, dass der Gewichtungsfaktor G umso größer ist, je mehr Bewegungsanteile in den einzelnen Bildabschnitten der Bilder der zu filternden Bildfolge enthalten sind. Über die Mischeinrichtung 16 führt dies dazu, dass mit zunehmenden Bewegungsanteilen in den Bildern der zu filternden Bildfolge die örtliche Filterung bevorzugt wird, dass heißt, dass das örtlich gefilterte Zwischensignal stärker gewichtet wird als das zeitlich gefilterte Zwischensignal.

Da bei dem Verfahren einzelne Bildabschnitte hinsichtlich des Vorhandenseins von Bewegung untersucht werden, können unterschiedlichen Bildabschnitte eines eingehenden Bildes unterschiedliche Bewegungsindikatoren zugeordnet werden, was zu einer unterschiedlichen Verarbeitung der einzelnen Bildabschnitte eines Bildes führen kann.

Die Bewegungsdetektoreinheit gemäß Figur 1 weist einen ersten Bewegungsdetektor 21 zur Bereitstellung eines ersten Bewegungsindikatorwertes D1(k) und einen zweiten Bewegungsdetektor 22 zur Bereitstellung eines zweiten Bewegungsindikatorwertes D2(k) auf. Diese Bewegungsindikatorwerte D1(k), D2(k) sind einer Bewertungseinheit 23 zugeführt, die den kleineren bzw. das Minimum dieser beiden Bewegungsindikatorwerte D1(k), D2(k) ermittelt und den kleineren dieser beiden Bewegungsindikatorwerte der Gewichtungsfaktorerzeugungseinheit 24 zuführt. Dem ersten Bewegungsdetektor 21 sind in dem Beispiel das zu filternde Signal S(z) bzw. der zu filternde Bildabschnitt P(k) und das verzögerte gefilterte Signal bzw. der verzögerte gefilterte Bildabschnitt P3(k-d) zugeführt.

Der erste Bewegungsdetektor 21 ist in dem Beispiel dazu ausgebildet, bildpunktweise die Beträge der Differenzen der einzelnen Bildinformationswerte der korrespondierenden Bildabschnitte P(k), P3(k-d) zu ermitteln und diese Beträge aufzusummieren um den ersten Bewegungsindikatorwert D1(k) zu erzeugen. Für diesen Wert gilt also:

$$D1(k) = \sum_{i=1}^{m} \sum_{j=1}^{n} \left| L_k(i,j) - L3_{k-d}(i,j) \right| \qquad (2a)$$

wobei $L_k(.)$ den Bildinformationswert eines Bildpunktes $P_k(.)$ des zu filternden Bildes P(k) und $L3_{k-d}(.)$ den Bildinformationswert eines Bildpunktes $P3_{k-d}(.)$ des verzögerten Bildes P3(k-d) bezeichnet.

Anstelle die Beträge einzelner Bildpunktdifferenzen zu bilden besteht auch die Möglichkeit, durch eine Filterung des ungefilterten Bildes P(k) und des bereits gefilterten Bildes P3(k-d) in dem jeweiligen Bild die Bildinformationswerte mehrerer jeweils räumlich in dem Bild benachbarter Bildpunkte zu einem Bildinformationswert für diese mehreren Punkte zusammenzufassen. Die so erhaltenen Bildinformationswerte, die jeweils für mehrere benachbarte Bildpunkte stehen werden dann in der erläuterten Weise subtrahiert, die Beträge der Differenzen werden gebildet und die Beträge werden aufaddiert.

Sofern die einzelnen Bildabschnitte nur jeweils einen Bildpunkt umfassen, vereinfacht sich die Gleichung (2a) zur Ermittlung des ersten Bewegungsindikatorwertes (D1(k)) wie folgt:

$$D1(k) = \left| L_k(i,j) - L3_{k-d}(i,j) \right| \qquad (2b)$$

Der erste Bewegungsindikatorwert D1(k) stellt somit ein Maß für die Abweichung zwischen dem Eingangs-Bildabschnitt P(k) und dem gefilterten verzögerten Bildabschnitt P3(k-d) dar. Diese Abweichung ist üblicherweise umso größer, je mehr Bewegungsanteile in der Bildfolge vorhanden sind, je stärker sich also der Bildinhalt aufgrund von sich bewegenden Objekten von Bild zu Bild ändert.

Dem zweiten Bewegungsdetektor 22 ist als Eingangssignal neben dem verzögerten bereits gefilterten Bildabschnitt P3(k-d) bzw. dem verzögerten gefilterten Bildsignal S3(z-d·m·n) das örtlich gefilterte erste Zwischensignal S2(z) bzw. der örtlich gefilterte zweite Zwischenbildabschnitt P2(k) zugeführt. Der zweite Bewegungsdetektor 22 ermittelt eine Abweichung zwischen dem gefilterten verzögerten Bildabschnitt P3(k-d) und dem örtlich gefilterten Zwischenbildabschnitt P2(k), wobei beispielsweise gilt:

$$D3(k) = \sum_{i=1}^{m} \sum_{j=1}^{n} \left| L2_k(i,j) - L3_{k-d}(i,j) \right| \qquad (3a)$$

$L2_k(.)$ bezeichnet dabei einen Bildinformationswert eines Bildpunktes des örtlich gefilterten Zwischenbildes P2(k).

Ebenso können in der oben erläuterten Weise mehrere Bildinformationswerte durch Filterung jeweils in P2(k) und P3(k) zusammengefasst und deren Betragsdifferenz gebildet werden.

Sofern die einzelnen Bildabschnitte nur jeweils einen Bildpunkt umfassen, vereinfacht sich die Gleichung (3a) zur Ermittlung des ersten Bewegungsindikatorwertes wie folgt:

$$D3(k) = \left| L2_k(i,j) - L3_{k-d}(i,j) \right| \qquad (3b)$$

Es sei darauf hingewiesen, dass anstelle der Betragsbildungen in den Gleichungen (2a,b) und (3a,b) selbstverständlich auch die Quadrate oder weitere geradzahlige Potenzen der Differenzen der einzelnen Bildinformationswerte gebildet werden könnten, um eine Abweichung der verglichenen Bilder P(k) und P3 (k-d) bzw. P2(k) und P3 (k-d) zu ermitteln.

Die Übertragungskennlinie der Gewichtungsfaktorerzeugungseinheit 24, die den Gewichtungsfaktor G abhängig von dem kleineren der beiden Bewegungsindikatorwerte D1(k), D2(k) erzeugt, ist beispielhaft in Figur 4 dargestellt. Wie bereits erläutert, ist es das Ziel die Filtercharakteristik der erfindungsgemäßen Vorrichtung so einzustellen, dass bei geringen Bewegungsanteilen in der Bildfolge eine zeitliche Filterung überwiegt, was bei einem kleinen Gewichtungsfaktor G erreicht wird, und dass bei starken Bewegungsanteilen eine örtliche Filterung überwiegt, was bei einem großen Gewichtungsfaktor G erreicht wird. Bei Erzeugung der Bewegungsindikatorwerte D1(k), D2(k) gemäß der Gleichungen (2a,b) und (3a,b) sind die Bewegungsindikatorwerte D1(k), D2(k) umso größer, je mehr Bewegungsanteile vorhanden sind, umso stärker also eine örtliche Filterung zu bevorzugen ist. Die Gewichtungsfaktorerzeugungseinheit 24 ist deshalb dazu ausgebildet, den Gewichtungsfaktor G so zu erzeugen, dass dieser innerhalb der Grenzen zwischen Null und Eins umso größer ist, je größer der Bewegungsindikatorwert Min(k) ist. Figur 4 zeigt beispielhaft zwei unterschiedliche Verläufe einer durch die Gewichtungsfaktorerzeugungseinheit 24 implementierten, die Abhängigkeit zwischen dem Bewegungsindikatorwert Min(k) und dem Gewichtungsfaktor G vorgebenden Kennlinie. Bei einem ersten Beispiel steigt der Gewichtungsfaktor G linear mit dem Bewegungsindikatorwert Min(k) an, bis ein Schwellenwert des Bewegungsindikatorwertes Min(k) erreicht ist, wobei der Gewichtungsfaktor G für Werte oberhalb dieses Schwellenwertes den Wert 1 annimmt. Bei einem weiteren Beispiel nähert sich der Gewichtungsfaktorwert G dem Wert 1 für größer werdende Bewegungsindikatorwerte Min(k) asymptotisch an.

Das erfindungsgemäße Verfahren kombiniert in vorteilhafter Weise die Vorzüge eines örtlichen Rauschreduktionsverfahrens und eines zeitlichen Rauschreduktionsverfahrens. Bei einem örtlichen Rauschreduktionsverfahren, bei dem zur Rauschreduktion nur Bildinformationen aus einem zu filternden Bild verwendet werden, besteht die Gefahr, dass feine Bildstrukturen, insbesondere sogenannte Texturen, vermeintlich als Rauschen erkannt und ausgefiltert werden. Bei der erfindungsgemäßen Vorrichtung bzw. bei dem erfindungsgemäßen Verfahren überwiegt die örtliche Rauschreduktion jedoch nur dann, wenn die Bildfolge viele Bewegungsanteile enthält. Bei Bewegtbildern ist das menschliche Auge jedoch ohnehin nicht in der Lage, neben der Bewegung auch feine Bildstrukturen zu erfassen, so dass die Ausfilterung solcher feiner Bildstrukturen durch das örtliche Rauschreduktionsverfahren kaum auffällt. Bei keinen oder nur geringen Bewegungsanteilen in der zu filternden Bildfolge überwiegt bei der erfindungsgemäßen Vorrichtung und dem erfindungsgemäßen Verfahren die zeitliche Rauschreduktion, die in der Lage ist, auch feine Bildstrukturen zu erhalten.

Als Bewegungsindikatorwert zur Erzeugung des Gewichtungsfaktors G wird indem das Minimum des ersten und zweiten Bewegungsindikatorwertes D1(k), D2(k) verwendet, um einen Wechsel von einer überwiegend örtlichen Rauschreduktion bei Bewegtbildern zu einer überwiegend zeitlichen Rauschreduktion bei Nicht-Bewegtbildern zu ermöglichen, wie nachfolgend erläutert ist:

Es sei zunächst angenommen, dass ein hoher Bewegungsgehalt in korrespondierenden Bildabschnitten aufeinanderfolgender Bilder der Bildfolge erkannt wird, wodurch ein großer Gewichtungsfaktor G gewählt wird und die örtliche Rauschreduktion überwiegt. Feine Bildstrukturen werden in erläuterter Weise durch die örtliche Rauschreduktion des Filters 12 ausgefiltert und sind in dem gefilterten Zwischenbildabschnitt P2(k), welcher den gefilterten Bildabschnitt P3(k) dominiert, nicht mehr vorhanden. Angenommen, die Bewegtbilder gehen nun in ein Standbild über, dann würde ein Vergleich des Eingangsbildabschnittes P(k) mit dem verzögerten gefilterten Bildabschnitt P3(k-d) immer noch eine erhebliche Abweichung zwischen den beiden Bildabschnitten liefern, da der Eingangs-Bildabschnitt P(k) feine Bildstrukturen enthalten kann, die durch die zunächst überwiegend örtliche Filterung ausgefiltert werden und somit in dem verzögerten gefilterten Bildsignal P3(k-d) nicht vorhanden sind. Sofern keine Bewegung in der zu filternden Bildfolge vorhanden ist, weicht das örtlich gefilterte Zwischensignal P2(k) jedoch nicht von dem verzögerten gefilterten Signal P3(k-d) ab, wodurch der Bewegungsindikatorwert D2(k) bei einem Standbild einen sehr kleinen Wert, idealerweise den Wert Null liefert, während der erste Bewegungsindikatorwert D1(k) erheblich größere Werte annehmen kann. Wird dieser kleine Wert des zweiten Bewegungsindikatorwertes D2(k) zur Erzeugung des Gewichtungsfaktors G verwendet, so führt dies zu einer Anpassung des Gewichtungsfaktors G dahingehend, dass nachfolgend die zeitliche Rauschreduktion bevorzugt wird, der zeitlich gefilterte erste Zwischenbildabschnitt P1(k) bei der Mischung der Zwischenbildabschnitte P1(k), P2(k) also stärker gewichtet wird. Bei weiter unverändertem Bildinhalt führt dies dazu, dass der erste Bewegungsindikatorwert D1(k) kleiner wird, da bei überwiegend zeitlicher Filterung nur noch Rauschen zur Abweichung zwischen dem Eingangs-Bildabschnitte P(k) und dem zeitlich gefilterten Bildabschnitt P3(k-d) führt. Sinkt der erste Bewegungsindikatorwert D1(k) dabei unter den zweiten Bewegungsindikatorwert D2(k), so dominiert der erste Bewegungsindikatorwert D1(k) die Erzeugung des Gewichtungsfaktors G.

Anstatt den zu filternden Bildabschnitt P(k) bzw. den daraus abgeleiteten örtlich gefilterten Zwischenbildabschnitt P2(k) mit einem verzögerten gefilterten Bildabschnitt P3(k-d) zu vergleichen, um eine Bewegungsdetektion durchzuführen, besteht in nicht näher dargestellter Weise allerdings auch die Möglichkeit, ungefilterte korrespondierende Bildabschnitte aufeinanderfolgender Bilder der Eingangsbildfolge zu vergleichen, um eine Bewegungsdetektion durchzuführen.

Bezugszeichenliste

| | |
|---|---|
| 11 | erstes Rauschreduktionsfilter |
| 12 | zweites Rauschreduktionsfilter |
| 13, 14 | Gewichtungseinheiten |
| 15 | Addierer |
| 16 | Mischeinrichtung |
| 20 | Bewegungsdetektionseinheit |
| 21, 22 | Bewegungsdetektoren |
| 23 | Bewertungseinheit |
| 24 | Gewichtungssignalerzeugungseinheit |
| 110, 111 | Gewichtungseinheiten, Multiplizierer |
| 112, 113 | Addierer |
| 114 | Einheit zur Betrags- oder Quadratbildung |
| 115 | Zuordnungseinheit |
| 121 | Einrichtung zur Signalaufspaltung |
| 122 | Filter |
| 123 | Addierer |
| 124 | Coring-Einheit |
| D1(k), D2(k) | Bewegungsindikatorwert |
| G | Gewichtungsfaktor |
| P(k) | Bild, Eingangsbild |
| P1(k) | zeitlich gefiltertes Zwischenbild |
| P2(k) | örtliches gefiltertes Zwischenbild |
| P3(k) | gefiltertes Bild |
| P3(k-d) | verzögertes gefiltertes Bild |
| $P_k(x,y)$ | Bildpunkt |
| S (z) | Bildsignal |
| S1(z) | zeitliches gefiltertes Zwischensignal |
| S2(z) | örtliches gefiltertes Zwischensignal |

S3(z)          gefiltertes Bildsignal

S3(z-d·m·n)    verzögertes gefiltertes Bildsignal

**Patentansprüche**

1. Verfahren zur Reduktion von Rauschen in einem Bildsignal (S(z)), das eine Bildfolge mit aufeinanderfolgenden Bildern repräsentiert, wobei jedes Bild wenigstens einen Bildabschnitt (P(k)) aufweist und wobei vorgesehen ist, für jeden Bildabschnitt (P(k)) eines Bildes der Bildfolge einen gefilterten Bildabschnitt (P3(k)) durch folgende Verfahrensschritte zu erzeugen:

    - Bereitstellen eines ersten gefilterten Zwischenbildabschnittes (P1(k)) durch Anwenden eines zeitlichen Rauschreduktionsverfahrens auf den Bildabschnitt (P(k)),
    - Bereitstellen eines zweiten gefilterten Zwischenbildabschnittes (P2(k)) durch Anwenden eines örtlichen Rauschreduktionsverfahrens auf den Bildabschnitt (P(k)),
    - Mischen der ersten und zweiten Zwischenbildabschnitte (P1(k)), P2(k)) unter Berücksichtigung wenigstens eines Gewichtungsfaktors (G), um den gefilterten Bildabschnitt (P3(k)) zu erzeugen,
    - Ermitteln wenigstens eines Bewegungsindikators (D1(k), D2(k), Min(k)) anhand des Inhalts von Bildabschnitten der Bildfolge und/oder anhand des Inhalts von gefilterten Bildabschnitten der Bildfolge, der ein Maß für das Vorhandensein bewegter Objekte in dem wenigstens einen Bildabschnitt darstellt, und Erzeugen des wenigstens einen Gewichtungsfaktors (G) abhängig von dem Bewegungsindikator (D1(k), D2(k), Min(k)).

2. Verfahren nach Anspruch 1, bei dem die Bildabschnitte (P(k), P3(k)) und Zwischenbildabschnitte (P1(k), P2 (k)) jeweils ein ganzes Bild umfassen.

3. Verfahren nach Anspruch 1, bei dem die Bildabschnitte (P(k), P3 (k)) und Zwischenbildabschnitte (P1 (k), P2 (k)) jeweils nur einen Bildpunkt eines Bildes umfassen.

4. Verfahren nach einem der Ansprüche 1 bis 3, bei dem der wenigstens eine Gewichtungsfaktor so gewählt ist, dass der zweite Zwischenbildabschnitt (P2(k)) um so stärker beim Mischen des ersten und zweiten Zwischenbildabschnittes (P1(k)), P2(k) gewichtet wird, je stärker der Bewegungsindikator (D1(k), D2(k), Min (k)) auf das Vorhandensein bewegter Objekte in dem Bildabschnitt hinweist.

5. Verfahren nach einem der vorangehenden Ansprüche, bei dem eine Abweichung zwischen dem Inhalt des Bildabschnittes (P(k)) und dem Inhalt eines zugehörigen verzögerten gefilterten Bildabschnittes (P3(k)) ermittelt wird, wobei der wenigstens eine Bewegungsindikator (D1(k)) ein Maß für die Abweichung zwischen diesen beiden Bildabschnitten (P(k), P3(k)) darstellt.

6. Verfahren nach Anspruch 5, bei dem das Ermitteln des Bewegungsindikators (D1(k)) für einen Bildabschnitt (P(k)) mit nur einem Bildpunkt folgenden Verfahrensschritte umfasst:

    - Ermitteln des Betrages oder des Quadrates der Differenz zwischen dem Bildinformationswert des Bildpunktes ($S_k(x,y)$), der den Bildabschnitt (P(k)) bildet, und dem Bildinformationswert eines zugehörigen, sich an derselben Bildposition befindlichen Bildpunktes ($S3_{k-d}(x,y)$), der den verzögerten gefilterten Bildabschnitt (P3(k-d)) bildet.

7. Verfahren nach Anspruch 5, bei dem das Ermitteln des Bewegungsindikators (D1(k)) für einen Bildabschnitt (P(k)) mit mehreren Bildpunkten folgenden Verfahrensschritte umfasst:

    - Ermitteln des Betrages oder des Quadrates der Differenz zwischen dem Bildinformationswert jedes Bildpunktes ($S_k(x,y)$) des Bildabschnitts (P(k)) und dem Bildinformationswert eines zugehörigen, sich an derselben Bildposition befindlichen Bildpunktes ($S3_{k-d}(x,y)$) des verzögerten gefilterten Bildabschnittes (P3 (k-d)) ,
    - Aufsummieren der für die einzelnen Bildpunkte ermittelten Beträge oder Quadrate.

8. Verfahren nach Anspruch 7, bei dem mehreren benachbart angeordneten Bildpunkten des Bildabschnitts (P(k)) und des gefilterten Bildabschnitts (P3(k-d)) durch Filterung jeweils ein gemeinsamer Bildinformationswert zugewiesen wird und bei dem Differenzen nur für die gemeinsamen Bildinformationswerte gebildet werden.

9. Verfahren nach Anspruch 8, bei dem der zu mehreren Bildpunkten gemeinsame Bildinformationswert der Summe der Bildinformationswerte der mehreren Bildpunkte entspricht.

10. Verfahren nach einem der Ansprüche 1 bis 4, bei dem eine Abweichung zwischen dem zweiten Zwischenbildabschnitt (P2(k)) und dem verzögerten gefilterten Bildabschnitt (P3(k)) ermittelt wird, wobei der Bewegungsindikator (D2(k)) ein Maß für die Abweichung zwischen diesen beiden Bildabschnitten darstellt.

11. Verfahren nach Anspruch 10, bei dem das Ermitteln des Bewegungsindikators (D2(k)) für einen Bildabschnitt (P (k)) mit nur einem Bildpunkt folgende Verfahrensschritte umfasst:

- Ermitteln des Betrages oder des Quadrates der Differenz zwischen dem Bildinformationswert des Bildpunktes ($S2_k(x,y)$), der den zweiten Zwischenbildabschnitt (P2(k)) bildet, und dem Bildinformationswert eines zugehörigen, sich an derselben Bildposition befindlichen Bildpunktes ($S3_{k-d}(x,y)$), der den verzögerten gefilterten Bildabschnitt (P3(k-d)) bildet.

12. Verfahren nach Anspruch 11, bei dem das Ermitteln des Bewegungsindikators (D2(k)) für einen Bildabschnitt (P (k)) mit mehreren Bildpunkten folgenden Verfahrensschritte umfasst:

- Ermitteln des Betrages oder des Quadrates der Differenz zwischen dem Bildinformationswert jedes Bildpunktes ($S2_k(x,y)$) des zweiten Zwischenbildabschnitts (P(k)) und dem Bildinformationswert eines zugehörigen, sich an derselben Bildposition befindlichen Bildpunktes ($S3_{k-d}(x,y)$) des verzögerten gefilterten Bildabschnittes (P3(k-d)),
- Aufsummieren der für die einzelnen Bildpunkte ermittelten Beträge oder Quadrate.

13. Verfahren nach Anspruch 12, bei dem mehreren benachbart angeordneten Bildpunkten des zweiten Bildabschnitts (P2(k)) und des gefilterten Bildabschnitts (P3(k-d)) durch Filterung jeweils ein gemeinsamer Bildinformationswert zugewiesen wird und bei dem Differenzen nur für die gemeinsamen Bildinformationswerte gebildet werden.

14. Verfahren nach Anspruch 13, bei dem der zu mehreren Bildpunkten gemeinsame Bildinformationswert der Summe der Bildinformationswerte der mehreren Bildpunkte entspricht.

15. Verfahren nach einem der vorangehenden Ansprüche, das folgende Verfahrensschritte zur Ermittlung des Bewegungsindikators aufweist:

- Ermitteln eines ersten Bewegungsindikators (D1(k)) anhand des Bildabschnitts (P(k)) und des gefilterten verzögerten Bildabschnitts (P3(k-d)),
- Ermitteln eines zweiten Bewegungsindikators (D2(k)) anhand des zweiten Zwischenbildabschnittes (P2(k)) und des gefilterten verzögerten Bildabschnittes (P3(k-d)),
- Ermitteln des Minimums der ersten und zweiten Bewegungsindikatoren (D1(k), D2(k)) und Auswählen des Minimums als Bewegungsindikator.

16. Verfahren nach einem der vorangehenden Ansprüche, bei dem der zweite Zwischenbildabschnitt beim Mischen des ersten und zweiten Zwischenbildabschnitt mit zunehmendem Wert des Bewegungsindikators (D1(k), D2(k), Min(k)) stärker gewichtet wird.

17. Verfahren nach einem der vorangehenden Ansprüche, bei dem für die zeitliche Rauschreduktion zur Ermittlung des ersten Zwischenbildabschnittes neben dem Eingangsbildabschnitt (P(k)) wenigstens ein verzögerter gefilterter Bildabschnitt (P3(k-d)) verwendet wird.

18. Verfahren nach einem der vorangehenden Ansprüche, bei dem das zeitliche Rauschreduktionsverfahren ein bewegungskompensiertes Rauschreduktionsverfahren ist.

19. Vorrichtung zur Reduktion von Rauschen in einem Bildsignal (S(z)), das eine Eingangsbildfolge mit aufeinanderfolgenden Bildern (P(k)), von denen jedes wenigstens einen Bildabschnitt aufweist, repräsentiert, die folgende Merkmale aufweist:

- ein erstes Rauschreduktionsfilter (11), dem das Bildsignal zugeführt ist und das dazu ausgebildet ist, für jeden Bildabschnitt (P(k)) eines Bilds der Eingangsbildfolge einen zeitlich gefilterten erstes Zwischenbildabschnitt (P1 (k)) zu erzeugen,

- ein zweites Rauschreduktionsfilter (12), dem das Bildsignal zugeführt ist und das dazu ausgebildet ist, für jeden Bildabschnitt (P(k)) eines Bilds der Bildfolge einen räumlich gefilterten zweiten Zwischenbildabschnitt (P2(k)) zu erzeugen,
- eine Mischanordnung (13, 14, 15), der der erste und zweite Zwischenbildabschnitt zugeführt sind und die einen gefilterten Bildabschnitt (P3(k)) aus dem ersten und zweiten Zwischenbildabschnitt (P1(k), P2(k)) durch Mischen nach Maßgabe eines Gewichtungsfaktors (D1(k)) erzeugt,
- eine Bewegungsdetektoreinheit (20), die einen Bewegungsindikator (D1(k), D2(k), Min(k)) anhand des Inhalts von Bildabschnitten der Bildfolge und/oder anhand von gefilterten Bildabschnitten der Bildfolge erzeugt, der ein Maß für das Vorhandensein bewegter Objekte in der Bildfolge darstellt,
- eine Gewichtungsfaktorerzeugungsschaltung (24), die den Gewichtungsfaktor (G) abhängig von dem Bewegungsindikator (D1 (k), D2(k), Min(k)) erzeugt.

20. Vorrichtung nach Anspruch 19, bei der der Bewegungsdetektoreinheit (20), der momentan zu filternde Bildabschnitt (P(k)) sowie ein verzögerter gefilterter Bildabschnitt (P3(k-d)) zugeführt sind, wobei der Bewegungsdetektor dazu ausgebildet ist, eine Abweichung zwischen diesen beiden Bildabschnitten (P(k), P3(k-d)) zu ermitteln und den Bewegungsindikator (D1(k)) abhängig von dieser Abweichung zu erzeugen.

21. Vorrichtung nach Anspruch19, bei der der Bewegungsdetektoreinheit (20), der zweite Zwischenbildabschnitt (P(2k)) sowie ein verzögerter gefilterter Bildabschnitt (P3(k-d)) zugeführt sind, wobei die Bewegungsdetektoreinheit (20) dazu ausgebildet ist, eine Abweichung zwischen diesen beiden Bildabschnitten (P2(k), P3(k-d)) zu ermitteln und den Bewegungsindikator (D2(k)) abhängig von dieser Abweichung zu erzeugen.

22. Vorrichtung nach Anspruch 19, bei der die Bewegungsdetektoreinheit (20) folgende Merkmale aufweist:

- einen ersten Bewegungsdetektor (21), dem ein momentan zu filternder Bildabschnitt (P(k)) sowie ein verzögerter gefilterter Bildabschnitt (P3(k-d)) zugeführt sind, und der dazu ausgebildet ist, eine Abweichung zwischen diesen beiden Bildabschnitten (P(k), P3(k-d)) zu ermitteln und einen von dieser Abweichung abhängigen ersten Bewegungsindikator (D1(k)) zu erzeugen,
- einen zweiten Bewegungsdetektor (22), dem der zweite Zwischenbildabschnitt (P2(k)) sowie ein verzögerter gefilterter Bildabschnitt (P3(k-d)) zugeführt sind, und der dazu ausgebildet ist, eine Abweichung zwischen diesen beiden Bildabschnitten (P(k), P3(k-d)) zu ermitteln und einen von dieser Abweichung abhängigen zweiten Bewegungsindikator (D2(k)) zu erzeugen,
- eine Bewertungseinheit (24), die den ersten und zweiten Bewegungsindikator vergleicht und die den kleineren der beiden Bewegungsindikatoren als Bewegungsindikator (Min(k)) ausgibt.

23. Vorrichtung nach einem der Ansprüche 19 bis 22, bei der die Bewegungsdetektoreinheit (20) dazu ausgebildet ist, den Bewegungsindikator so zu erzeugen, dass dessen Wert mit zunehmender Abweichung der zur Erzeugung des Bewegungsindikators verglichenen Bildabschnitte zunimmt.

24. Vorrichtung nach einem der Ansprüche 19 bis 23, bei der der ersten Filteranordnung (11) ein verzögerter gefilterter Bildabschnitt (P3(k-d)) zur Durchführung des zeitlichen Rauschreduktionsverfahrens zugeführt ist.

25. Vorrichtung nach Anspruch 24, bei dem der Abstand des verzögerten gefilterten Bildabschnittes P3(k-d) zu dem zu filternden Bildabschnitt (P(k)) der Bildfolge mehr als ein Bild beträgt.

# FIG 1

EP 1 672 911 A2

## FIG 2

P(k)

m

n

$P_k(x,y)$

## FIG 3

P3(k-d)

11

1-r

111

r

P(k)

110

112

P1(k)

## FIG 4a

## FIG 4b

## FIG 5a

## FIG 5b

## FIG 6